# EUROPEAN PATENT APPLICATION

(11) **EP 3 989 146 A1**
(43) Date of publication of application: **27.04.2022**
(21) Application number: 21150668.8
(22) Date of filing: 08.01.2021
(51) Int. Cl.: G06Q 10/10, G06Q 10/08, G06K 19/077

(54) **SYSTEM FOR MONITORING THE EXPIRY DATE OF BOTTLED OR CANNED FOOD PRODUCTS**

(30) Priority: 26.10.2020 IT 202000025303
(71) Applicant: H24INVENT SRL, 30172 Mestre, Venezia (IT)
(72) Inventor: Ranzato, Enrico, 30172 Venezia (IT)
(74) Representative: Leganza, Alessandro

(57) **Abstract**

The present invention relates to a system for monitoring the expiry date of food products contained in bottle or tin and, more particularly, a system configured to inform a user about the expiration of some food products.

## Description

### Technical field

The present invention relates, in general, to a system for monitoring the expiry date of food products contained in bottle or tin and, more particularly, to a system configured to inform a user about the expiration of some food products.

### Background of the invention

Foodstuffs are organic substances which deteriorate more or less rapidly as a result of external factors such as light, air and water. These external factors indeed cause the multiplication of microorganisms present inside the foodstuffs.

The nature of the deterioration depends principally on the microbial community, composed of one or more different species, which becomes active at the time of deterioration, and on the chemical or physical changes which it is able to produce altering one or more components of the foodstuffs.

Following deterioration, a foodstuff modifies the own original organoleptic characteristics, such as smell, taste, colour and consistency. A foodstuff is considered to be deteriorated when it becomes unacceptable from a sensorial point of view, and therefore it can no longer be used by the consumer.

It is estimated that, nowadays, about 25% of foodstuffs are wasted due to deterioration, with huge losses from an economic point of view.

In order to avoid such wastages, and ensure that foodstuffs are consumed before their deterioration, the food products, in particular those which perish rapidly, such as milk products, yoghurt, fresh fruit juices and similar foodstuffs, are provided with an expiry date.

The expiry date is typically affixed on the packaging of the food product and indicates the date until when a foodstuff is hygienically suitable for consumption, whether kept in the correct storage conditions.

Typically, the expiry date consists of the indication, in the order of the day, of the month and, possibly of the year. Once the expiry date has passed by the foodstuff can constitute a danger for health due to the bacterial proliferation, and therefore can no longer be consumed.

In modern society, life is becoming more and more chaotic and often consumers, once they have bought one or more food products, and despite the expiry date reported on the packagings, they forget to consume the foodstuffs within that date.

This problem becomes even more accentuated in epidemiological pandemic situations, such as that of Covid-19, wherein the users try to stock up on long-life products too, often packaged in metal or glass cans, such as canned peeled tomatoes, legumes and vegetables in general or packaged meats, completely forgetting the expiry date.

It often happens, both for fresh products and also for long-life products, that, once bought, not taking the expiry date into consideration, many foodstuffs deteriorate and must be thrown away, with consequent food waste.

In particular, for food products which, at temperatures comprised between +4°C and 30°C, are in the liquid, viscous liquid or semi-solid state, or in a powdered state, i.e. for food products which in said temperature range does not show its own shape, and therefore require a container, of which they assume the internal shape, it is necessary to provide a system for monitoring the expiry date.

Furthermore, a further problem is the one particularly found by visually impaired users in that these subjects, having difficulty in quickly viewing the expiry dates, they would need systems that warn them about the approaching expiration of food products, as for example milk, yogurt or long-life canned products.

### Summary of the invention

Therefore, the problem addressed by the present invention is that of providing a system for monitoring the expiry date of a food product contained in a container of at least partially cylindrical shape, such as a food product contained in a bottle or in a can, in order to overcome, or at least to limit, the above-mentioned drawbacks.

In particular, the main object of the present invention is to provide a system for monitoring the expiry date of a food product which has the function of indicating to the consumer the imminent expiration of a foodstuff and such that it can operate in any food storage environment, i.e. both in low temperature environments, for example inside a refrigerator, and in environments without light, for example inside a kitchen cabinet.

Another object of the present invention is to provide a system for monitoring the expiry date of a food product with the function of indicating to the consumer the imminent expiration of a foodstuff, which has a simplified structure and low production costs.

Not the least object of the present invention is to provide a system for monitoring the expiry date of a food product contained in a container of at least partially cylindrical shape (60), such as, for example, a bottle or a can, with the function of indicating to the consumer the imminent expiration of a foodstuff, which is easy and immediate its use.

An object of the invention relates therefore to a system (100) for monitoring the expiration of a food product contained in a container of at least partially cylindrical shape (60) comprising:
- at least one intelligent portable device (50),
- an O-Ring or an elastic (30) suitable for holding the container of at least partially cylindrical shape (60) inside it, wherein said O-Ring or elastic is linked to at least one wireless communication module (40) configured to communicate with a corresponding wireless communication module (51) of an intelligent portable device (50).

It is evident how the presence of the wireless communication module (40) allows to inform a user about the expiration of the foodstuff to be stored.

Another object is a method for monitoring the expiration of a food product contained in a container of at least partially cylindrical shape.

Finally, another object is a method for monitoring the expiration of a food product contained in a container of at least partially cylindrical shape by a visually impaired user.

Further features and advantages of the system and of the methods for monitoring the expiration of a food product contained in a container of at least partially cylindrical shape will become clearer from the detailed description, from the description of preferred embodiments, of the examples of the invention, provided as an indication of the invention.

Preferred aspects of the invention are reported in the dependent claims.

### Brief description of the drawings

With reference to the annexed drawings, the following elements are considered:
(100) system for monitoring the expiration of a food product,
(90) O-Ring or elastic (30) suitable for holding the container of at least partially cylindrical
shape (60) inside it, linked to at least one wireless communication module (40),
(60) container of at least partially cylindrical shape,
(50) intelligent portable device,
(30) O-Ring or elastic suitable for holding the container of at least partially cylindrical shape inside it,
(40) wireless communication module,
(51) wireless communication module of an intelligent portable device,
(41) a memory unit,
(70) visual signalling means,
(42) timer,
(71) LED,
(72) embossing of an alphanumeric or Braille character,
(53) sound communication means,
(52) application of the intelligent portable device.

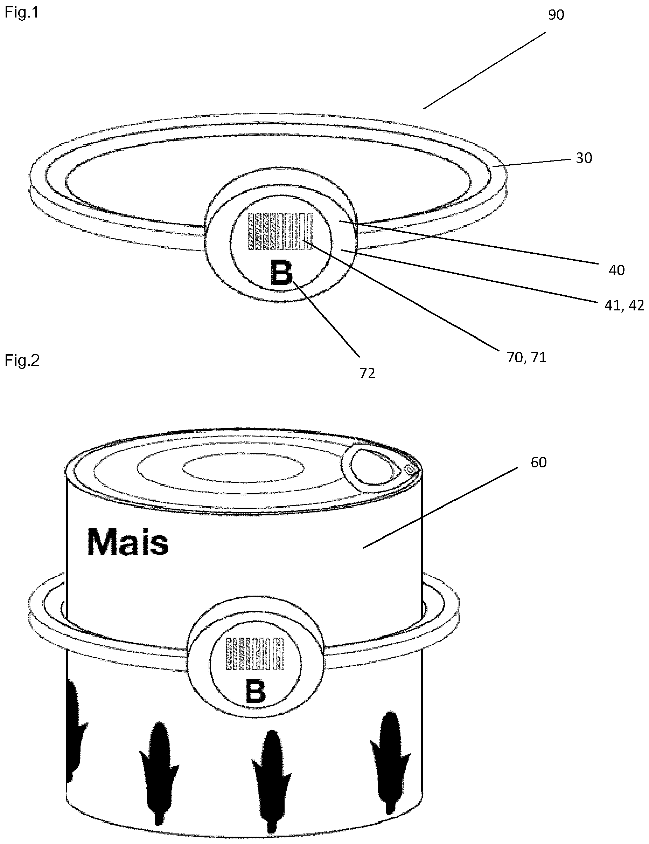

Figure 1 shows a perspective view of a first embodiment, wherein part of the system (100) for monitoring the expiration of a food product object of the present invention consists of:
   (30) O-Ring or an elastic suitable for holding the container of at least partially cylindrical shape (60) inside it, (40) wireless communication module, (41) a memory unit inside the wireless communication module (40), (70) visual signalling means, (42) timer, (71) LED, (72) embossing of an alphanumeric or Braille character.
Figure 2 is a perspective view, wherein part of the system (100) for monitoring the expiration of a food product object of the present invention illustrated in Fig. 1 is applied on a container of at least partially cylindrical shape (60). In the specific case, (60) consists of a corn can.
Figure 3 is a perspective view of the entire system (100) to monitor the expiration of a food product object of the present invention, applied to a container of at least partially cylindrical shape (60).
Figures 4 and 5 are diagrams which schematically show alternative modes of operation of the system (100) object of the present invention. In particular, in Fig. 4, the approach of the expiry date is indicated by means of the application of the intelligent portable device (52), while in Fig. 5 the approach of the expiry date is indicated by means of visual signalling means (70).

### Detailed description of the invention and of the preferred embodiments

With reference to Figures from 1 to 3, these show a first embodiment of the system (100) for monitoring the expiry date of food products according to the present invention.

In particular, an object of the present invention is a system (100) for monitoring the expiry date of a food product contained in a container at least partially cylindrical shape (60) comprising:
- at least one intelligent portable device (50),
- an O-Ring or an elastic (30) suitable for holding the container of at least partially cylindrical shape (60) inside it, wherein said O-Ring or elastic is linked to at least one wireless communication module (40) configured to communicate with a corresponding wireless communication module (51) of an intelligent portable device (50).

It has been indeed surprisingly found that said combination of elements and means allows to effectively monitor the expiration of a food product contained in a container of at least partially cylindrical shape (60).

According to a preferred embodiment, the container of at least partially cylindrical shape (60) consists of a bottle, can or a tin. Indeed, the system (100) of the present invention has solved the problem of monitoring the expiry date of food products without their own shape, food products which, at temperature comprises between +4°C and 30°C, are in a liquid, viscous liquid or semi-solid state, or which in said temperature range are solids in the powder state. By way of example, the container of at least partially cylindrical shape (60) could be made of a bottle of milk, a bottle of tomato sauce, a can containing soft drinks, a peeled tomatoes, pickles, olives tin, meat or tuna box, etc.

In the following description, and in the annexed claims, the expression "intelligent portable device (50)" is understood to refer to any type of portable electronic device able to be connected to other devices or to a network by means of a communication protocol, such as Bluetooth^{®}, NFC, Wi-Fi, 3G, etc., which can operate in an interactive and autonomous manner. Examples of such intelligent portable devices include a smartphone, an iPhone^{®}, a palmtop computer or PDA (Personal Digital Assistant), a tablet, a laptop, and similar devices.

In the following description, and in the annexed claims, the expression "food product" is understood to refer to a food product that can be contained in a container of at least partially cylindrical shape (60).

The O-Ring or elastic (30) is made of extensible material, i.e. material that stretches when subjected to traction. By way of example, the O-Ring or elastic (30) can be made of rubber, silicone rubber, vulcanized rubber, etc.

The system (100) has a wireless communication module (40) linked or rather attached to the O-Ring or elastic (30). This coupling can take place by means of mechanical fixing means and/or by welding or gluing.

Preferably, the wireless communication module (40) is a short-range wireless communication module, for example a Bluetooth^{®} wireless communication module or a NFC (Near Field Communication) wireless communication module.

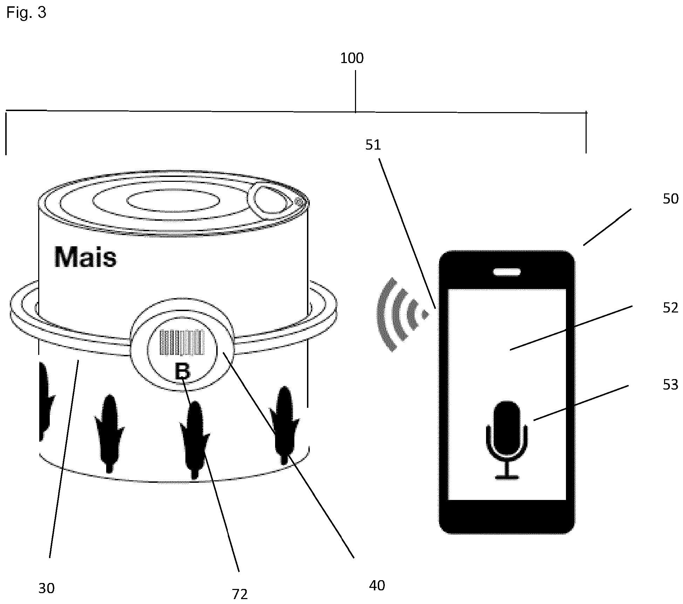

The wireless communication module (40) is configured to communicate with an intelligent portable device (50) of the user (see Figures 3, 4 and 5).

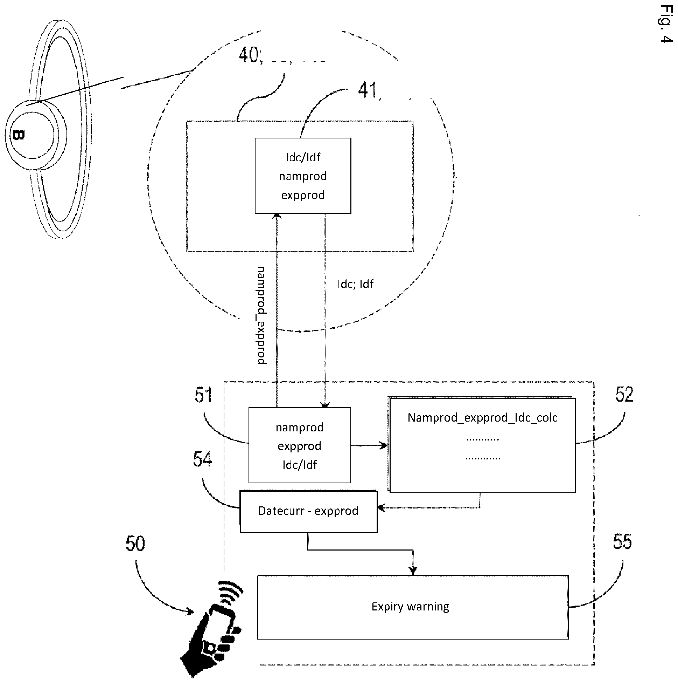

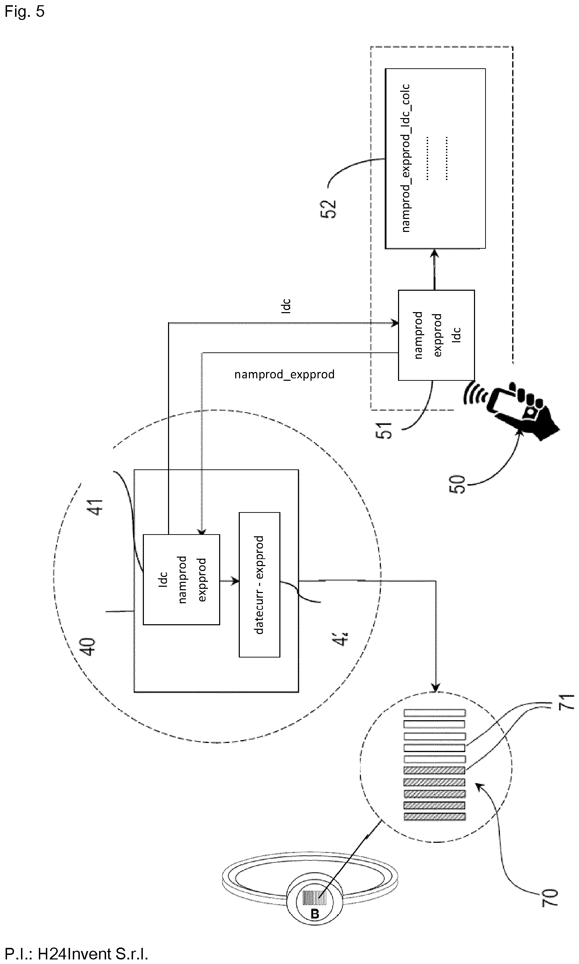

Preferably, and as schematically shown in Figures 4 and 5, the wireless communication module (40) comprises a memory unit (41) configured to store data relating to the food product contained in the container (60), specifically the product name and its expiry date, transmitted to the wireless communication module (40) by the intelligent portable device (50).

For this purpose, and as shown in detail in Figures 4 and 5, the intelligent portable device (50) comprises a wireless communication module (51), preferably, analogous to the wireless communication module (40) linked to the O-ring or elastic, and an application (52). Inside the memory unit (41) of the wireless communication module (40) there is moreover stored an identification code of the O-Ring or elastic (30) linked to at least one wireless communication module (40) (as a whole (90)).

In an alternative embodiment, shown in Figure 5, the wireless communication module (40) linked to the O-Ring or elastic (30) further comprises visual signalling means (70), configured to indicate to the user how many days are left before the expiration of a food product associated with the O-Ring or elastic (30) linked to at least one wireless communication module (40) (as a whole (90)).

In particular, the visual signalling means (70) are provided on the outer surface of the wireless communication module (40) opposite to that of the container of at least partially cylindrical shape (60). Preferably, the visual signalling means (70) are provided at the centre of the outer surface of the wireless communication module (40) opposite to that of the container of at least partially cylindrical shape (60), so as to be easily and immediately visible by the user. Certainly, the visual signalling means can be positioned at any other point of the wireless communication module (40), provided they satisfy the condition of being visible to the user.

In the embodiment shown in Figures 1, 2, 3 and 5, the visual signalling means (70) comprise an array LEDs (Light Emitting Diodes) 71, for example ten LEDs, one for each day left before to the expiration.

In this variant embodiment, the wireless communication module (40) is a wireless communication module of the active type, preferably an active NFC module, which comprises a timer (42).

The timer (42) is configured to perform a countdown between a current date datecurr and the expiry date expprod of the product linked to the wireless communication module (40) and, as to this approaching expiry date expprod, to activate the lighting-up of a number of LEDs (71) equal to the number of days left before expiration of the product.

The wireless communication module (40) further comprises battery power supply means of known type (not shown) for the LEDs (71) and the timer (42).

With reference to Figure 4, the operation of the system (100) for monitoring the expiry date of food products according to the present invention is now described.

In the following of the present description reference will be made, as an intelligent portable device (50), to a smartphone or I-Phone^{®} (50), but it is understood that the comments are also applicable to any intelligent portable device available to the user and suitable for purpose.

Firstly, the user, by means of the application (52) being present inside the smartphone (50), enters the name namprod and expiry date expprod of a food product contained in the container of at least partially cylindrical (60). For example <milk; 1_April_2020>.

Subsequently, the user moves the smartphone (50) towards the wireless communication module (40) linked to the O-ring or elastic (30), typically at a distance not more than 10 cm, where the smartphone (50) is able to detect the presence of the wireless communication module (40).

At this point, the wireless communication module (40) and the wireless communication module (51) of the smartphone (50) are able to communicate with each other.

In particular:
- the wireless communication module (40) transmits, to the wireless communication module (51) of the smartphone (50), the identification code Idc of said communication module (40), which is stored in the memory (41); and
- the wireless communication module (51) of the smartphone (50) transmits to the wireless communication module (40) name namprod and expiry date expprod of the food product previously entered by the user through the application (52) of the smartphone (50), for example <milk; 1_April_2020>.

These data are stored, together with the identification code Idc, in the memory (41) of the wireless communication module (40).

Following this exchange of information, there is an association between the food product contained inside in the container (60), the expiry date of the food product and the wireless communication module (40) linked to the O-Ring or elastic which surrounds the container of at least partially cylindrical (60). This association, for example <milk; 1_aprile_2020_ldc> or <yogurt-29_marzo_2020_ldf> is present both in the memory (41) of its wireless communication module (40) and in the application (52) of the smartphone (50).

Preferably, a colour is associated with the wireless communication module (40) and/or the O-Ring or elastic (30). More preferably, both the wireless communication module (40) and the O-Ring or the elastic (30) are coloured, preferably (40) and (30) are the same colour. It follows that, by means of the application (52), the user can associate with a food product, expiry date, identification code Idc or Idf wireless communication module (40) as well the corresponding colc or coif colour, for example, in the case of the wireless communication module (40) <milk; 1_April_2020_ldc_red>.

A completely similar procedure can be followed for any wireless communication module (40) linked to the O-Ring or elastic (30) available to the user and may be used by him/her for any other product provided with an expiry date.

The smartphone (50) includes a timer (54), by means of which the application (52) can perform a countdown between the current date datecurr and the expiry date expprod of each product and, close to this expiry date expprod, for example when there are two days left before the expiration of the product, that is expprod - datecurr = 2, display on the screen (55) of the smartphone (50), for each product, an "imminent expiry" warning.

The user is thus informed that, for example, the milk contained in the container (60) wrapped by the O-Ring or elastic (30) linked to the communication module (40) of red colour is expiring and therefore must be consumed.

Assume that, alternatively, the user wishes to know the expiry date of one or more products contained, for example, in his/her refrigerator inside of containers at least partially cylindrical (60).

For this purpose, the user moves the smartphone (50) towards the wireless communication modules (40) linked to the food products of interest. The wireless communication module (40) then transmits to the wireless communication module (51) of the smartphone (50) the name namprod and expiry date expprod of the product contained in the container (60), and this information is displayed by means of the application (52), on the screen (55) of the intelligent portable device (50) in the form of an "imminent expiry" warning.

Once the food product contained in the container (60) has been consumed, the wireless communication module (40) linked to the O-Ring or elastic (30) can be used for another food contained in a container of at least partially cylindrical (60).

For this purpose, the memory (41) of the wireless communication module (40) can be deleted and it is possible to store on it, manner according to the method described above, the name and expiry date of a new food product.

Preferably, the application (52) of the smartphone (50), depending on the type of expiring products, can warn to the user recipes which use these products as ingredients. This allows, advantageously, a further reduction of possible wastefulness.

With reference to Figure 5, the operation of the system (100), in its embodiment comprising a wireless communication module (40) of the active type, a timer (42) and visual signalling means (70) is now described.

As well in this case, as described above with reference to Figure 4, firstly, the user, by means of the application (52) being nside the smartphone (50), enters the name namprod and expiry date expprod of a food product linked to the wireless communication module (40).

Subsequently, the user moves the smartphone (50) towards the wireless communication module (40), typically at a distance of not more than 10 cm, where the smartphone (50) is able to detect the presence of the wireless communication (40).

At this point, the wireless communication module (40) and the wireless communication module (51) of the smartphone (50) are able to communicate with each other.

In particular:
- the wireless communication module (40) transmits to the wireless communication module (51) of the smartphone (50) an identification code Idc of the wireless communication module (40); and
- the wireless communication module (51) of the smartphone (50) transmits to the wireless communication module (40) the name namprod and expiry date expprod of the food product, previously entered by the user. These data are stored, together with the identification code Idc, in the memory (41) of the wireless communication module (40).

Following this exchange of information, there is an association between the food product contained in the container (60) wrapped in the O-Ring or elastic (30) linked to the wireless communication module (40), expiry date of the food product and wireless communication module (40).

As previously described, a colour is preferably associated with the wireless communication module (40) and/or the O-Ring or elastic (30). It follows that, by means of the application (52), the user can associate with a food product, expiry date, identification code Idc of the wireless communication module (40), also the related colc colour.

At this point, assume that the user wishes to know whether the product linked to the wireless communication module (40) is expiring.

For this purpose, the user moves the smartphone (50) towards wireless communication module (40), in order to activate the wireless communication module (40), in particular, the timer (42). Once activated, the timer performs a countdown between the current date datecurr and the expiry date expprod of the product and activates the lighting-up of a number of LEDs, for example five LEDs, equal to the number of days left before the expiration. The user is then informed that the product will expire within five days.

According to a preferred embodiment, the system (100) comprises an identification code (Idc; Idcon), said wireless communication module (40) being configured to transmit to the intelligent portable device (50) said identification code (Idc; Idcon).

According to a preferred embodiment, the wireless communication module (40) comprises a memory unit (41), and wherein the wireless communication module (51) of the intelligent portable device (50) being configured to transmit to the wireless communication module (40) name (namprod) and expiry date (expprod) of a specific food product contained in a container of at least partially cylindrical shape wrapped by the O-Ring or elastic, wherein said name (namprod) and expiry date (expprod) were previously entered into the intelligent portable device (50) by means of an application (52) of the intelligent portable device (50), the name (namprod) and expiry date (expprod) being stored in said memory unit (41).

According to a preferred embodiment, the wireless communication module (40) of the system (100) is further configured to transmit said name (namprod) and expiry date (expprod) to the intelligent portable device (50), therein previously stored in the memory unit (41).

According to a preferred embodiment, the system (100) further comprising visual signalling means (70) and a timer (42) in electrical communication with said visual signalling means (70), said timer (42) being configured to perform a countdown between a current date (datecurr) and the expiry date of the product (expprod) and activate the lighting-up of the visual signalling means (70).

According to a preferred embodiment, the aforementioned visual signalling means (70) comprise an array of LEDs (71) and wherein said timer (42) is configured to activate lighting-up of a number of LEDs (71) equal to the difference between the expiry date of the product (expprod) and the current date (datecurr).

According to a preferred embodiment of the system (100),
- the wireless communication module (40) comprises an embossing of an alphanumeric or Braille character (72) on its outer surface opposite to that of the container of at least partially cylindrical shape (60) and
- the intelligent portable device (50) further comprises sound communication means (53). This preferred embodiment is indeed very useful for visually impaired users, allowing them to use the system (100) more effectively.

Alphanumeric or Braille character (72) means an alphabetic letter or a number or a letter or a number written in Braille writing.

Sound communication means (53) means that the intelligent portable device (50) has vocal commands or vocal or sound notifications, for example through a loudspeaker or headphones.

According to a preferred embodiment, the alphanumeric or Braille character (72) is an alphabetic letter, preferably capital letter, which is the initial of the colour presented by the wireless communication module (40) and/or the O- Ring or elastic (30).

Another object is a method for monitoring the expiration of a food product contained in a container of at least partially cylindrical shaped (60) by means of the system (100) described above, including preferred embodiments, comprising the following steps:
a) applying an O-Ring or an elastic (30) linked to at least one wireless communication module (40) around the container of at least partially cylindrical shape (60),
b) by means of the application (52) of the intelligent portable device (50), entering the name (namprod) and expiry date (expprod) of a specific food product,
c) the intelligent portable device (50) transmits the data of step b) to the wireless communication module (40) which stores them in the memory unit (41),
d) the wireless communication module (40) by means of visual signalling means (70) and a timer (42), displays the residual duration time of the food product; or, alternatively, upon activation of the application (52) of the intelligent portable device (50), the intelligent portable device (50) warns the user of the approaching expiration of the food product.

Another object is a method for visually impaired users for monitoring the expiration of a food product contained in a container of at least partially cylindrical shaped (60) by means of the system (100) described above, including preferred embodiments, comprising the following steps:

a1) applying an O-Ring or an elastic (30) linked to at least one wireless communication module (40) around the container of at least partially cylindrical shape (60), wherein said communication module (40) comprises an embossing of an alphanumeric or Braille character (72) on its outer surface opposite that of the container of at least partially cylindrical shape (60),

b1) by means of the application (52) of the intelligent portable device (50), entering the name (namprod) and expiry date (expprod) of a specific food product,

c1) the intelligent portable device (50) transmits the data of step b1) to the wireless communication module (40) comprising an embossing of an alphanumeric or Braille character (72) which stores said data in the memory (41),

d1) optionally, the wireless communication module (40) by means of visual signalling means (70) and a timer (42), displays the residual duration time of the food product,

e1) by means of the activation of the application (52) of the intelligent portable device (50), the intelligent portable device (50) by means of sound communication means (53) warns the visually impaired user of the approaching expiration of the food product, moreover specifying the alphanumeric or Braille character of the wireless communication module (40),

f1) the user, through finger contact on the embossing of the alphanumeric or Braille character (72) of the communication module (40), recognizes the food product close to the expiration.

It is evident that said method is particularly advantageous for visually impaired subjects since it allows them to effectively monitor the expiry dates of their food products.

Preferably, in step a1) the embossing of an alphanumeric or Braille character (72) is one letter, preferably capital letter, which is the initial of the colour of the wireless communication module (40) and of the O- Ring or elastic (30); for example, a communication module (40) and the O-Ring or elastic (30) both white will have the embossing of the letter "B" on the wireless communication module (40).

From the above-mentioned description, the features of the system for monitoring the expiry date of food products object of the present invention are clear, thus, as the relative advantages are clear.

Further variants of the embodiment described above are possible, without departing from the teaching of the invention. Finally, it is clear that the system for monitoring the expiry of food products thus designed is subject to numerous modifications and variations; furthermore, all the details can be replaced by technically equivalent elements. Basically, the materials used, as well as the dimensions, may be any according to the technical requirements.

## Claims

1. System (100) for monitoring the expiry date of a food product contained in a container of at least partially cylindrical shaped (60) comprising:
- at least one intelligent portable device (50),
- an O-Ring or an elastic (30) suitable for holding the container of at least partially cylindrical shape (60) inside it, wherein said O-Ring or elastic is linked to at least one wireless communication module (40) configured to communicate with a corresponding wireless communication module (51) of an intelligent portable device (50).

2. System (100) according to claim 1, wherein the container of at least partially cylindrical shape (60) consists of a bottle, can or a tin.

3. System (100) according to any one of claims from 1 to 2, wherein said system comprises an identification code (Idc; Idcon), said wireless communication module (40) being configured to transmit to the intelligent portable device (50) said identification code (Idc; Idcon).

4. System (100) according to any one of claims from 1 to 3, wherein the wireless communication module (40) comprises a memory unit (41), and wherein the wireless communication module (51) of the intelligent portable device (50) being configured to transmit to the wireless communication module (40) the name (namprod) and expiry date (expprod) of a specific food product contained in a container of at least partially cylindrical shape wrapped by the O-Ring or elastic, wherein said name (namprod) and expiry date (expprod) were previously entered into the intelligent portable device (50) by means of an application (52) of the intelligent portable device (50), the name (namprod) and the expiry date (expprod) being stored in said memory unit (41).

5. System (100) according to any one of claims from 1 to 4, wherein said wireless communication module (40) of the system (100) is further configured to transmit said name (namprod) and expiry date (expprod) to the intelligent portable device (50), therein previously stored in the memory unit (41).

6. System (100) according to any one of claims from 1 to 5, further comprising visual signalling means (70) and a timer (42) in electrical communication with said visual signalling means (70), said timer (42) being configured to perform a countdown between a current date (datecurr) and the expiry date of the product (expprod) and to activate lighting-up of the visual signalling means (70).

7. System (100) according to claim 6, wherein said visual signalling means (70) comprise an array of LEDs (71) and wherein said timer (42) is configured to activatel the lighting-up of a number of LEDs (71) equal to the difference between the expiry date of the product (expprod) and the current date (datecurr).

8. System (100) according to any one of claims from 1 to 7, wherein:
- the wireless communication module (40) comprises an embossing of an alphanumeric or Braille character (72) on its outer surface opposite to that of the container of at least partially cylindrical shape (60) and
- the intelligent portable device (50) further comprises sound communication means (53).

9. System (100) according to claim 8, wherein the alphanumeric or Braille character (72) is an alphabetic letter which is the initial of the colour presented by the wireless communication module (40) and/or the O-Ring or elastic (30).

10. Method for monitoring the expiration of a food product contained in a container of at least partially cylindrical shape (60) by means of the system according to any one of claims from 1 to 9 comprising the following steps:
a) applying an O-Ring or an elastic (30) linked to at least one wireless communication module (40) around the container of at least partially cylindrical shape (60),
b) by means of the application (52) of the intelligent portable device (50), entering the name (namprod) and expiry date (expprod) of a specific food product
c) the intelligent portable device (50) transmits the data of step b) to the wireless communication module (40) which stores them in the memory unit (41),
d) the wireless communication module (40) by means of visual signalling means (70) and a timer (42), displays the residual duration time of the food product; or, alternatively, upon activation of the application (52) of the intelligent portable device (50), the intelligent portable device (50) warns the user of the approaching expiration of the food product.

11. Method for visually impaired users for monitoring the expiration of a food product contained in a container of at least partially cylindrical shape (60) by means of the system according to any one of claims from 1 to 9 comprising the following steps:
a1) applying an O-Ring or an elastic (30) linked to at least one wireless communication module (40) around the container of at least partially cylindrical shape (60), wherein said communication module (40) comprises an embossing of an alphanumeric or Braille character (72) on its outer surface opposite that of the container of at least partially cylindrical shape (60),
b1) by means of the application (52) of the intelligent portable device (50), entering the name (namprod) and expiry date (expprod) of a specific food product,
c1) the intelligent portable device (50) transmits the data of step b1) to the wireless communication module (40) comprising an embossing of an alphanumeric or Braille character (72) which stores said data in the memory unit (41),
d1) optionally, the wireless communication module (40) by means of visual signalling means (70) and a timer (42), displays the residual duration time of the food product,
e1) by means of the activation of the application (52) of the intelligent portable device (50), the intelligent portable device (50) by means of sound communication means (53) warns the visually impaired user of the approaching expiration of the food product, moreover specifying the alphanumeric or Braille character of the wireless communication module (40), f1) the user, through finger contact on the embossing alphanumeric or Braille character (72) of the communication module (40), recognizes the food product close to the expiration.

12. Method according to claim 11, wherein in step a1) the embossing of an alphanumeric or Braille character (72) is one letter which is the initial of the colour of the wireless communication module (40) and of the O-Ring or elastic (30).

13. Use of a system (100) according to any one of claims from 1 to 9 for monitoring the expiry date of a food product contained in a container of at least partially cylindrical shape (60).
